Europäisches Patentamt

(19) European Patent Office

Office européen des brevets

(11) Veröffentlichungsnummer: **0 108 904**
A1

# (12) EUROPÄISCHE PATENTANMELDUNG

(21) Anmeldenummer: 83109850.4

(22) Anmeldetag: 03.10.83

(51) Int. Cl.³: **E 04 C 2/36,** B 29 F 3/04

(30) Priorität: 16.10.82 DE 3238370

(43) Veröffentlichungstag der Anmeldung: 23.05.84
Patentblatt 84/21

(84) Benannte Vertragsstaaten: **AT DE FR GB IT NL**

(71) Anmelder: **BAYER AG, Konzernverwaltung RP
Patentabteilung, D-5090 Leverkusen 1 Bayerwerk (DE)**

(72) Erfinder: **Zygan, Hieronymus, Dr., Zum Hahnenberg 48,
D-5068 Odenthal (DE)**
Erfinder: **Winchenbach, Helmut, Dipl.-Ing., Elbenweg 11,
D-4005 Meerbusch (DE)**
Erfinder: **Pawlowski, Juri, Dr., Heymannstrasse 52,
D-5090 Leverkusen (DE)**

(54) **Wendelstegdoppelplatte.**

(57) Bei der erfindungsgemäßen Stegdoppelplatte sind die gewendelten Stege (3) zwischen den Platten (1, 2) so gegeneinander versetzt extrudiert, daß die Wendelstegdoppelplatte nahezu in allen Richtungen gleiche Biegesteifigkeit aufweist.

0108904

BAYER AKTIENGESELLSCHAFT          5090 Leverkusen, Bayerwerk

Zentralbereich
Patente, Marken und Lizenzen   KR/Th/c


## Wendelstegdoppelplatte


Die Erfindung betrifft eine Wendelstegdoppelplatte mit geringer Durchbiegung und ein Verfahren zu ihrer Herstellung, bestehend aus zwei parallelen Platten, die durch mehrere, mit Abstand untereinander und von Rand zu Rand durchlaufende Stegbänder verbunden sind, deren Mittelebenen einerseits senkrecht auf den Platten stehen und andererseits quer dazu nach vorgebenen Muster verlaufen.

Bekannt ist eine extrudierte Stegdoppelplatte mit durchgehenden geraden Stegen. Die Biegesteifigkeit einer solchen Stegdoppelplatte ist quer zur Richtung der Stege wesentlich geringer als in Richtung der Stege. Ebenfalls ist die Torsionssteifigkeit verhältnismäßig gering. Dieses anisotrope Verhalten der Biegesteifigkeit einer Stegdoppelplatte ist für bestimmte Anwendungen außerordentlich nachteilig. Dieser Mangel läßt sich zwar dadurch beseitigen, daß neben der Schar von parallel laufenden Stegen noch eine zweite Schar von senkrecht dazu verlaufenden Stegen angeordnet wird, wodurch eine sogenannte Kreuzstegdoppelplatte entsteht. Leider läßt sich die Konstruktion nicht in bekannter Art und Weise extrudieren, so daß eine wirtschaftliche Fertigung, wie sie

Le A 21 484-Ausland

bei Massenprodukten gefordert wird, kaum möglich ist.

Weiter ist in der US-PS 3 246 058 eine Hohlkammerplatte beschrieben, bei der Stegbänder mit ihren Rändern auf beiseitig unten und oben angrenzende Bahnen senkrecht geklebt werden, wobei die Stegbänder zickzack-, wellen- oder mäanderförmig verlaufen können. Der Nachteil dieser Hohlkammerplatte ist, daß in dieser Patentschrift keine Isotropie oder Anisotropie der Biegesteifigkeit erwähnt wird. Auch ist der Kraftübergang im geklebten Übergangsbereich vom Steg zur äußeren Platte problematisch. Weiter ist in folge mehrerer Arbeitsgänge die Herstellung dieser Hohlkammerplatten aufwendig.

Der Erfindung liegt die Aufgabe zugrunde, eine wirtschaftlich herstellbare Stegplatte mit geringem Materialeinsatz zu finden, deren Torsions- und Biegesteifigkeit in mindestens zwei vorgegebenen Richtungen nahezu eine Isotropie aufweist.

Die Aufgabe wird erfindungsgemäß dadurch gelöst, daß die Wendelstegdoppelplatte durch gleichzeitig mit der Platten extrudierte Stegbänder aus thermoplastischen Kunststoff durch entsprechende seitliche Verschachtelungen (Eingriffe) in mindestens zwei sich kreuzenden Richtungen etwa gleiche Biegesteifigkeiten aufweist.

Bei der erfindungsgemäßen extrudierten Wendelstegdoppelplatte wird durch zwischen den beiden äußeren Platten

Le A 21 484

- 3 -

0108904

liegende Stegbänder die stetig oder in Abständen die
Richtung ihrer Hauptebene ändern, eine gegenseitige starke
Verschachtelung (feststellbar durch gedachte auf den
Platten senkrechte Ebenen in verschiedenen Richtungen)
erzielt, welche zu einer nahezu isotropen Biegesteifigkeit der Wandelstegdoppelplatte- insbesondere auch quer
zu den Stegbändern- führt. So besitzt beispielsweise eine
Wendelstegdoppelplatte mit zickzackförmigen Stegbändern,
wenn das als Eingriffsparameter genannte Verhältnis der
Länge s der geraden Abschnitte der Stegbänder zu ihrem
Abstand d untereinander genügend groß ist, eine quasiisotrope Biegesteifigkeit.

Trotz Wendelung des Stegbandes erhöht sich bei gleichem
Abstand d die Länge der Stegbänder bezogen auf die
Flächeneinheit und damit auch der Materialverbrauch nicht.

Dazu kommt noch, daß bei der Wendelstegdoppelplatte gleichzeitig eine höhere Knickfestigkeit im Vergleich zur konventionellen Stegdoppelplatte gegeben ist, weil die auf der
Druckseite liegende Platte keine Möglichkeit wie bei der
konventionellen Platte mehr hat, parallel zu den Stegbändern auf der ganzen Länge einzuknicken.

Die Wendelstegdoppelplatten können für alle Zwecke verwendet werden, für die auch bisher konventionelle Stegdoppelplatten eingesetzt wurden. Vorteilhaft sind sie
insbesondere dort, wo es auf gleiches Steifigkeitsverhalten in allen Richtungen (Isotropie) und auf hohe
Torsionssteifigkeit ankommt.

<u>Le A 21 484</u>

In einer besonderen Ausführungsform fallen die Richtungen mit den Hauptachsen zusammen.

Durch die entsprechende Gestaltung der Stegbänder wird eine nahezu gleiche Biegesteifigkeit entlang der Hauptachsen erzielt, die zum Beispiel bei rechteckigen Wendelstegdoppelplatten parallel zu den Rändern verlaufen.

In einer weiteren Ausführungsform beträgt bei zickzackförmigen Stegbändern das Eingriffs-Verhältnis Seitenlänge zum Abstand der Stegbänder untereinander $\gtreqqless$ 4.

Diese Stegdoppelplatte, bei der die Stegbänder unter 90° abgewinkelt sein können, ist besonders wirtschaftlich.

In einer anderen Ausführungsform sind bei verbundenen Wendelstegdoppelplatten die Richtungen der Stegbänder versetzt angeordnet.

Durch mehrlagige Wendelstegdoppelplatten, deren Hauptrichtungen verschieden vorgegeben werden können, sind optimale Bedingungen hinsichtlich anderer Eigenschaften (z.B. betreffend die Wärmeleitfähigkeit) zu erreichen.

Zur Herstellung einer Stegdoppelplatte werden die Extrusionsdüsen für die Stegbänder relativ zu denen der Platten entsprechend dem gewünschten Muster bewegt.

Le A 21 484

0108904

Durch dieses einfache Verfahren ist es möglich, jedes beliebige Muster durch Extrudieren herzustellen. So kann derjenige Teil des Werkzeugs, mit dessen Hilfe die Stegbänder geformt werden, mit einer derartigen Amplitude gegenüber dem verbleibenden Teil hin und her bewegt wird, daß die resultierende Wendelstegdoppelplatte den gewünschten Wert des Eingriffsparameters annimmt. Dabei bestimmt die Frequenz dieser Hin- und Herbewegung im Vergleich zur Extrusionsgeschwindigkeit den Winkel, den die (nahezu) geradlinigen Stücke der Stegbänder mit der Extrusionsrichtung bilden. Für besondere Zwecke kann anstatt der gleichförmigen auch eine beliebige ungleichförmige Hin- und Herbewegung z.B. eine Sinusbewegung sinnvoll sein, die zu entsprechend anders gewendelten Stegbändern führt.

Selbstverständlich können die relativen Abmessungen der angegebenen Querschnittsprofile von Wendelstegdoppelplatten noch in verschiedenster Weise variiert werden.

Eine Kombination des Profils mit Deckschichten aus Metall, Kunststoff oder anderen Materialien ist möglich, z.B. durch Beschichten, Laminieren oder Kaschieren. Auch ist ein Ausschäumen der Hohlkammern während der Extrusion oder anschließend in einem getrennten Arbeitsgang durchführbar.

Zur Herstellung der Wendelstegdoppelplatten sind im Prinzip alle thermoplastischen Kunststoffe geeignet, insbesondere transparente und lichtdurchlässige Kunststoffe. Beispiele sind Polyolefine wie Polyethylen und

Le A 21 484

Polypropylen, Vinylhalogenidpolymerisate wie Polyvinylchlorid, Polyamide wie Polyamid 6 und Polyamid 6,6,
Polyurethane, aromatische Polyester wie Polyalkylen-
und Polybutylenterephthalat; Polyacrylate- und -Methacrylate wie Polymethylmethacrylat, ABS-Kunststoffe,
aromatische Polycarbonate wie Bisphenol-A-Polycarbonat,
Polyvinylaromaten wie Polystyrol. Alle können Füllstoffe,
Pigmente und Verstärkerfüllstoffe wie Glasfasern enthalten.

Ausführungsbeispiele sind in den Zeichnungen dargestellt
und werden nachstehend näher beschrieben. Es zeigen:

Fig. 1    Wendelstegdoppelplatte

Fig. 2    "          mit zickzackförmi-
                     gen Stegband

Fig. 3    "          mit kurven(sinus)-
                     förmigen Stegband

Fig. 4    "          mit mäanderförmi-
                     gen Stegband

Fig. 5    "          mit Lastabtra-
                     gung längs zum
                     Stegband

Fig. 6    "          mit Lastabtragung
                     quer zum Stegband

Fig. 7    Diagramm Durchbiegung/Belastung

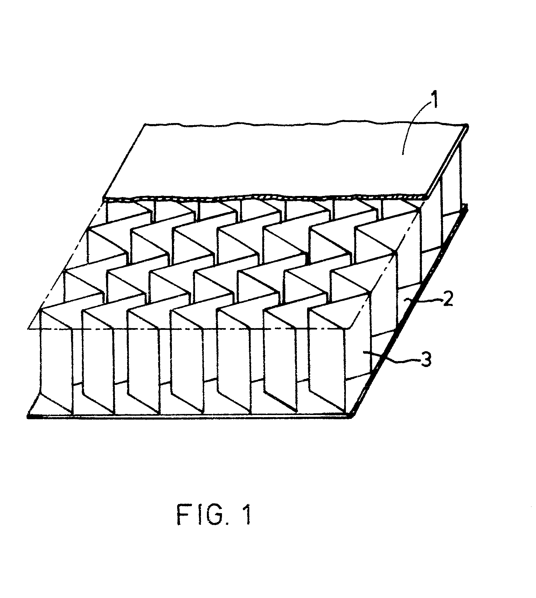

In Fig. 1 ist eine Wendelstegdoppelplatte dargestellt,
die aus oberer und unterer Platte 1,2 sowie Stegbändern 3
besteht.

Le A 21 484

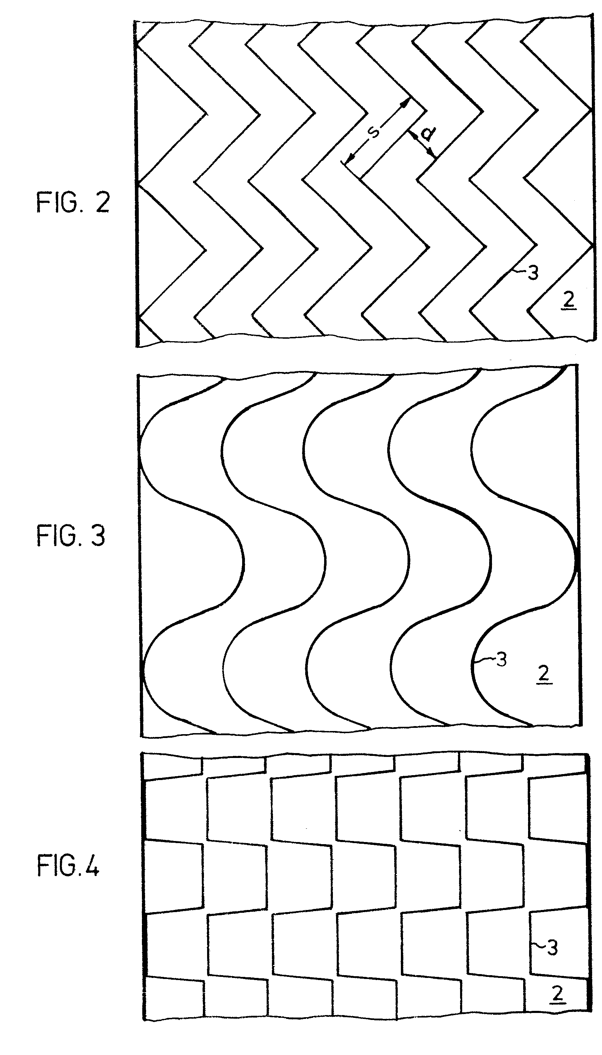

In Fig. 2 - 4 sind die Wendelstegdoppelplatten in in Höhe der Stegbänder geschnitten, die zickzack-, kurven- und mäanderförmig ausgebildet sind. Der Eingriffsparameter ergibt sich jeweils aus dem Verhältnis Stegbandlänge/ Stegbandabstand = s/d.

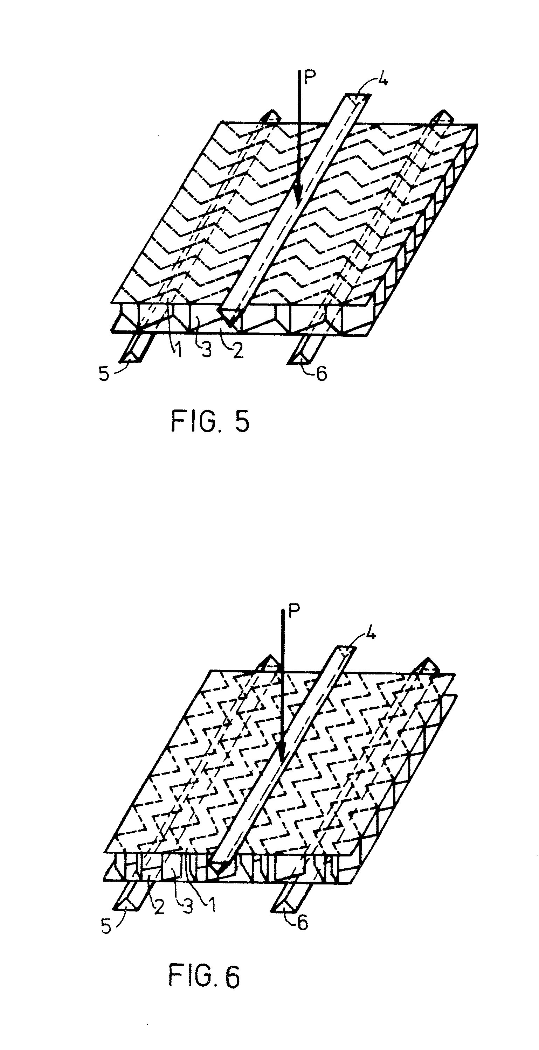

In Fig. 5 - 6 ist die Lastabtragung längs oder quer zu den Stegbändern angegeben, wobei die Kraft P über einen Lastbalken 4 in die Wendelstegdoppelplatte eingeleitet und von dieser in die Balkenauflager 5,6 übertragen wird.

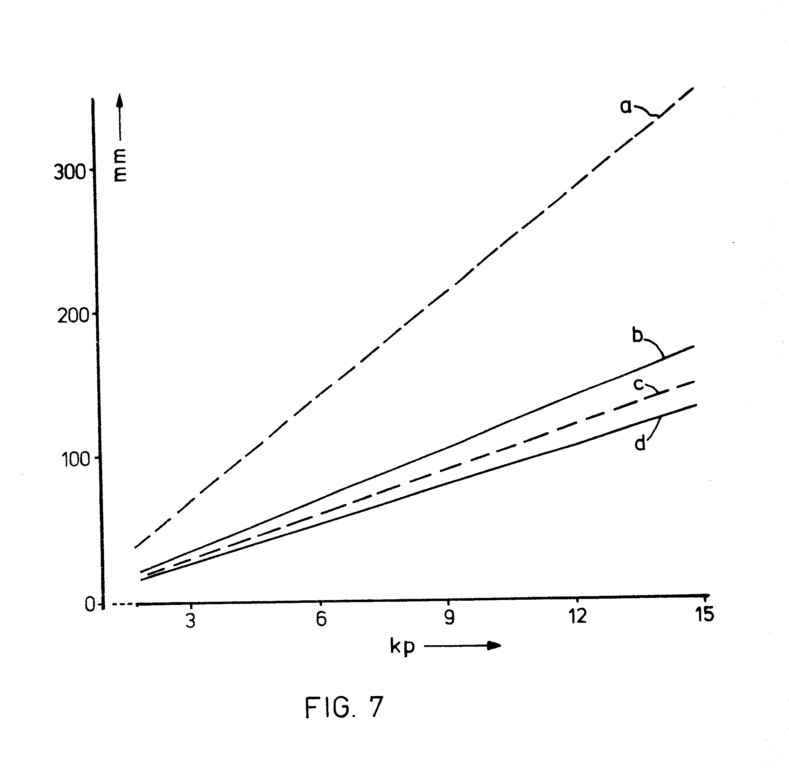

In Fig. 7 ist ein Diagramm dargestellt, wo die Durchbiegung über der Belastung (siehe Beispiel) aufgetragen ist.

Le A 21 484

Beispiel

Es wurden quadratische Wendelstegdoppelplatten der Größe 300 x 300 x 12 mm mit einem Eingriffsparameter s/d = 2 und s/d = 4 mit einer aus gleichem Material (Makrolon) gefertigten konventionellen Stegdoppelplatte mit gleichen Abmessungen verglichen. Zwecks gleicher Versuchsbedingungen hatten alle Platten auch noch dieselbe Steghöhe h = 10 mm und dieselbe Stegbreite bei gleicher Dicke der beiden Platten. Die Meßanordnung ist aus Fig. 5 + 6 ersichtlich. Gemessen wurde die Durchbiegung bei Belastung der Platten in der einen als auch der anderen Hauptachsenrichtung. Während bei gleihcher Belastung der konventionellen Stegdoppelplatte (mit geraden Stegen) die Durchbiegung in den beiden Hauptrichtungen (I und II zu Stegbänder) siehe die gestrichelten Geraden (a,c) in Fig. 7 - wie 1:3,6 verhielt, verbesserte sich die Isotropie bei einer Wendelstegdoppelplatte, deren Eingriffsparameter s/d = 2 war, das Verhältnis der Durchbiegung auf 1:1,5 und bei s/d = 4 betrug es 1:1,2. Die ausgezogenen Linien (b,d) in Fig. 7 geben die Durchbiegung der erfindungsgemäßen Wendelstegdoppelplatte mit dem Eingriffsparameter 4 wieder. Daraus ist ersichtlich, daß eine nahezu isotrope Wendelstegdoppelplatte erhalten werden kann, wenn man erfindungsgemäß den Eingriffsparameter s/d genügend groß wählt.

Le A 21 484

Patentansprüche

1. Wendelstegdoppelplatte mit geringer Durchbiegung, bestehend aus zwei parallelen Platten, die durch mehrere, mit Abstand untereinander und von Rand zu Rand durchlaufende Stegbänder verbunden sind, deren Mittelebenen einerseits senkrecht auf den Platten stehen und andererseits quer dazu nach vorgegebenen Muster verlaufen, dadurch gekennzeichnet, daß die Wendelstegdoppelplatte durch gleichzeitig mit den Platten (1,2) extrudierten Stegbänder (3) aus thermoplastischen Kunststoff durch ensprechende seitliche Verschachtelungen (Eingriffe) in mindestens zwei sich kreuzenden Richtungen etwa gleiche Biegesteifigkeit aufweist.

2. Wendelstegdoppelplatten nach Anspruch 1, dadurch gekennzeichnet, daß die Richtungen mit den Hauptachsen zusammenfallen.

3. Wendelstegdoppelplatten nach Anspruch 1-2, dadurch gekennzeichnet, daß bei zickzackförmigen Stegbändern (3) das Eingriffs-Verhältnis Seitenlänge zum Abstand der Stegbänder untereinander $\geqq 2$ beträgt.

4. Wendelstegdoppelplatten nach Anspruch 1-3, dadurch gekennzeichnet, daß bei verbundenen Stegdoppelplatten die Richtungen der Stegbänder (3) versetzt angeordnet sind.

Le A 21 484

0108904

5. Verfahren zur Herstellung einer Wendelstegdoppelplatte nach Anspruch 1-3, dadurch gekennzeichnet,
   daß die die Extrusionsdüsen für die Stegbänder (3)
   relativ zu denen der Platten (1,2) entsprechend dem
   gewünschten Muster bewegt werden.

Le A 21 484

FIG. 1

0108904

2/4

FIG. 2

FIG. 3

FIG. 4

FIG. 5

FIG. 6

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (int. Cl. ³) |
|---|---|---|---|
| X | DE-A-2 527 787 (NIHON)<br>* Seite 8, Zeilen 1-10; Seite 8, Zeile 26 - Seite 9, Zeile 5; Seite 10, Zeile 8 - Seite 11, Zeile 4; Seite 11, Zeile 24 - Seite 12, Zeile 10; Seite 12, Zeile 23 - Seite 13, Zeile 19; Figuren 1-12,15,20 *<br><br>----- | 1-5 | E 04 C 2/36<br>B 29 F 3/04 |

| RECHERCHIERTE SACHGEBIETE (Int. Cl. ³) |
|---|
| E 04 C<br>B 29 F |

Der vorliegende Recherchenbericht wurde für alle Patentansprüche erstellt.

| Recherchenort | Abschlußdatum der Recherche | Prüfer |
|---|---|---|
| DEN HAAG | 23-01-1984 | VANDEVONDELE J.P.H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82